# EUROPEAN PATENT APPLICATION

(11) **EP 2 924 835 A1**
(43) Date of publication of application: **30.09.2015**
(21) Application number: 14162151.6
(22) Date of filing: 27.03.2014
(51) Int. Cl.: H02G 3/38, E04F 15/12

(54) **Formwork element for floor box system**

(71) Applicant: Vergokan, 9700 Oudenaarde (BE)
(72) Inventor: LEUS, Thomas, 9050 GENTBRUGGE (BE); COLPAERT, Stijn, 9700 OUDENAARDE (BE)
(74) Representative: Gevers Patents

(57) **Abstract**

The present invention relates to a formwork element for a floor box system to create an opening towards a floor box while substrate material is provided around the floor box. The formwork element comprises a first part and a second part, wherein both parts comprise first and second connecting means for connecting the first part to the second part and wherein after connection the outside surface of the formwork element over the whole contour of the opening is formed.

The present invention further relates to two identical parts connectable to each other to form the formwork element.

## Description

### Technical field

The present invention relates to a formwork element for a floor box system to create an opening towards a floor box while substrate material is provided around the floor box.

### Background art

Guiding cables on a floor are typically assembled in floor trunking. To have access to these cables, a floor box system is used. The floor box system is provided with an opening to the upper surface of the floor, such that the floor box connecting floor trunking is accessible from above. This allows external devices to be plugged in sockets which are provided in the floor box system. The sockets are connected in the floor box system to the cables in the floor trunking.

The floor boxes and the floor trunking are arranged on a floor foundation, for example a concrete floor which may be provided by hollow core slabs, and thereby connected with each other. Thereafter, intermediate layers of the floor are provided on the floor foundation, and thus also on the floor boxes and the floor trunking. The intermediate layers may for example be a layer of insulation material or a screed layer. These intermediate layers are provided around the floor box while an opening is safeguarded on top of the floor box to access the floor box and/or to provide components such as sockets in or above the floor box. After applying the intermediate layers, the floor is provided with a floor covering, such as for example carpet or tiles.

To apply the intermediate layers it is important that the floor boxes are sealed off such that no or only a limited amount of floor material, such as for example insulation foam or screed, may enter the floor boxes. Known systems use a formwork element which is arranged on top of the floor box to avoid or minimise intrusion and to leave an opening in the floor above the floor box when the floor is installed.

A first type of known formwork elements are hollow formwork elements. A hollow cardboard cylinder is for example used. Cardboard formwork elements needs to have a sufficient thickness to resist against the force of the applied substrate material. This has the disadvantage that a thick cardboard is needed which creates a lot of waste afterwards. Other known hollow formwork elements are made of plastic tubes or plastic casings. To limit the thickness of some of these, strengthening ribs are applied on the inside of these plastic hollow formwork elements. After applying the intermediate layers of the floor, these formwork elements are removed, creating a lot of waste. Furthermore, transporting and storing these hollow formwork elements requires huge volumes. Another disadvantage of this know formwork elements is that removing the hollow elements after applying the intermediate layers is a tedious and time-consuming undertaking because the intermediate layers are often attached to the formwork element.

Another type of known formwork elements are full formwork elements in the shape of the opening to be provided. Such elements can be in all kind of materials such as expanded polystyrene or other plastics, but also in wood or in metal. Despite a better resistance to the pressures of the intermediate layers, the disadvantage of these formwork elements is the increased weight of these full elements versus their hollow counterparts which adds to the amount of waste. Other disadvantages such as waste after use and large transport and storage volumes are also related to this second type of formwork elements.

### Disclosure of the invention

It is an aim of the present invention to provide a formwork element for creating an opening on top of a floor box positioned on a floor foundation while intermediate layers are provided around the floor box, which formwork element is easy to install and store and does leave less waste after use.

This aim is achieved according to the invention of a formwork element showing the technical characteristics of the first independent claim.

The formwork element comprises a first part having a first sidewall which forms a first portion of the outside surface of the formwork element, and a second part having a second sidewall which forms a second portion of the outside surface of the formwork element. The first part and the second part have first and second connecting means which connect the first part to the second part. The first and second portion form after connection the formwork element over the whole contour of the opening.

The advantage of working with a formwork element in two parts is that it allows to assemble the formwork element when used and on the place where it is used.

In another embodiment of the present invention, the first part and second part are configured in such a way that the second part can be at least partially positioned in the first part. In this embodiment, the two parts, at least partially positioned into each other, are taking less space for transport and storage than a one formwork element which is advantageous on all levels in the commercial chain of the formwork element.

In a further embodiment, the first part has first floor box connecting means for connecting the formwork element to the floor box. The advantage is that by connecting the formwork element to the floor box, intrusion of substrate material which is provided around the floor box is avoided or reduced to a minimum.

In another embodiment, the second part has second floor box connecting means for connecting the formwork element to the floor box. Likewise, the advantage of connecting the formwork element to the floor box is that intrusion of intermediate layers in the opening of the floor box is avoided or minimized.

In a further embodiment, the first floor box connecting means have at least one connecting means requiring a rotation movement of the element around an axis which is substantially perpendicular to the base floor. In this embodiment, connecting the formwork element with the floor box therefore requires a only basic and simple movement, which is an advantage over other more complicated means of connecting the formwork element to the floor box.

In yet another embodiment, the second floor box connecting means have at least one connecting means requiring a rotation movement of the element around an axis which is substantially perpendicular to the base floor. Again, in this embodiment, only a basic movement is required for connecting the formwork element to the floor box, which is an advantage over other more complicated means of connecting the formwork element to the floor box. The connecting means in this embodiment facilitate installation of the element and is timesaving.

In a further embodiment, the first sidewall has a first main portion and two first sidewall connection portions which are rotatable with respect to the first main portion. The above mentioned first connecting means are at least partially provided on the two first sidewall connection portions. The advantage is that connection between the two parts is made by rotatable sidewall connection portions which are user friendly and time saving and do not require any other external tool for installation.

In another embodiment, the second sidewall has a second main portion and two second sidewall connection portions which are rotatable with respect to the second main portion. The above mentioned second connecting means are at least partially provided on the two second sidewall connection portions. Similarly, using rotatable sidewall connection portions for making the connection between the two parts is user friendly and time saving wherein no other tool is needed.

In a further embodiment, a connection between the two parts of the formwork element is made by the overlap of a first one of the two first sidewall connection portions with a first one of the two second sidewall connection portions, and by the overlap of a second one of the two first sidewall connection portions with a second one of the two second sidewall connection portions. The first and second sidewall connection portions are straightforward to combine in order to make a connection between the two parts of the formwork element.

In another embodiment, the first part and the second part are identical. The advantage of using identical parts is that only one type of part has to be manufactured which makes production less expensive. Identical parts are also easy to store and to transport. A final advantage of working with identical parts, is that the installer will be less likely to make mistakes when applying the formwork elements. If the parts were different in size or shape, the installer would have to transport the right number of every part. A missing part could then lead to a delay in applying the intermediate layers.

It is also an aim of the present invention to provide a formwork element for creating an opening in an intermediate layer, while this layer is provided around a floor box. The formwork element has two identical parts connectable to each other to form the formwork element. Each part has a sidewall for forming the outside surface of the element which is at least partially in contact with the intermediate layer when in use and connecting means for connecting each part to an identical part.

This aim is achieved according to the invention of a formwork element showing the technical characteristics of the second independent claim.

In another embodiment, the formwork element further comprises a top wall connected to the side wall forming a frame open in two planes. The first plane is positioned where the identical parts connect, whereas the second plane is positioned where the formwork element in use faces the floor box.

### Brief description of the drawings

The invention will be further elucidated by means of the following description and the appended figures.
Figure 1 shows in a perspective view from above an adjustable floor box according to an embodiment of the present invention.
Figure 2 shows the bottom plate of the adjustable floor box of Figure 1.
Figure 3 shows the top plate of the adjustable floor box of Figure 1.
Figure 4 shows in a perspective view from above the top plate of the adjustable floor box of Figure 1 and a formwork element.
Figure 5 shows in a perspective view from below the top plate and the formwork element of Figure 4 connected to each other.
Figure 6 shows in a perspective view from above an adjusting part of the adjustable floor box of Figure 1 positioned in the lowest predetermined position.
Figure 7 shows the adjusting part of Figure 6 positioned in the highest predetermined position.
Figure 8 shows in a perspective view from below the bottom part and the top part of the adjusting part of Figure 6.
Figure 9 shows in a perspective view from above the bottom part of the adjusting part of Figure 6.
Figure 10 shows an exploded view of a cover assembly according to an embodiment of the present invention.
Figure 11 shows in a perspective view from above a formwork element in accordance with an embodiment of the present invention.
Figure 12a shows a bottom view of the formwork element of Figure 11.
Figure 12b shows a front view of the formwork element.
Figure 12c shows a top view of the formwork element.
Figure 12d shows a left side view of the formwork element.
Figure 13a shows in a perspective view from above the outside surface of a part of the formwork element illustrated in Figure 11.
Figure 13b shows in a perspective view from above the inside surface of a part of the formwork element illustrated in Figure 11.
Figure 14a shows a bottom view of a part of the formwork element illustrated in Figures 13.
Figure 14b shows a right side view of a part of the formwork element illustrated in Figures 13.
Figure 14c shows a front view of a part of the formwork element illustrated in Figures 13.
Figure 14d shows a top view of a part of the formwork element illustrated in Figures 13.
Figure 15 shows an exploded view of the formwork element according to an embodiment of the present invention.
Figure 16a shows a front view of the formwork element illustrated in Figure 15.
Figure 16b shows a top view of the formwork element illustrated in Figure 15.
Figure 17 shows a perspective view from above of two parts forming the formwork element in accordance with an embodiment of the present invention.
Figure 18 shows a detailed view of the connecting means of the two parts forming the formwork element as illustrated in Figure 17.
Figure 19a shows a top view of a first step of closing the two parts of the formwork element in accordance with an embodiment of the present invention.
Figure 19b shows a top view of a second step of closing the two parts of the formwork element in accordance with an embodiment of the present invention.
Figure 20 shows in a perspective view from above the inside surface of a part of the formwork element in accordance with another embodiment of the present invention.
Figure 21 a shows a front view of a part of the formwork element illustrated in Figure 20.
Figure 21b shows a right side view of a part of the formwork element illustrated in Figure 20.
Figure 21c shows a top view of a part of the formwork element illustrated in Figure 20.
Figure 22 shows in a perspective view from above a formwork element in accordance with an embodiment of the present invention.
Figure 23a shows a front view of the formwork element illustrated in Figure 22.
Figure 23b shows a right side view of the formwork element illustrated in Figure 22.
Figure 23c shows a top view of the formwork element illustrated in Figure 22.

### Modes for carrying out the invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

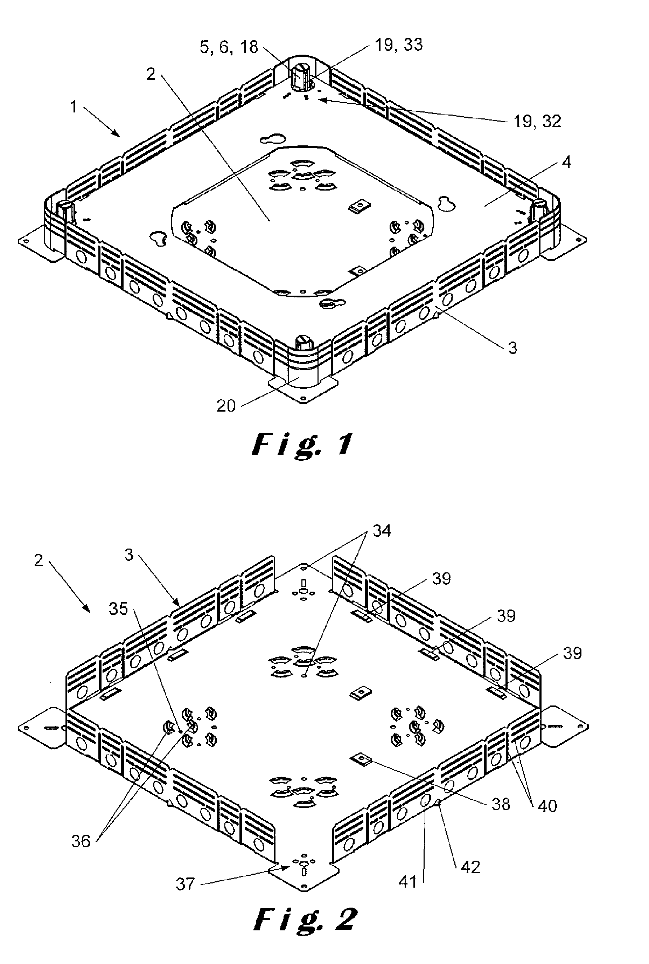

Figure 1 shows a perspective view of an embodiment of an adjustable floor box 1 according to the present invention. The figure illustrates the bottom plate 2 of the adjustable floor box 1 on which four adjusting parts 6 are arranged in the corners. The bottom plate 2 has side walls 3 which form together with the outer walls 20 of the adjusting parts 6 the side walls of the adjustable floor box 1. The top plate 4 of the adjustable floor box 1 is supported on the adjusting parts 6 and connected therewith.

The adjusting parts 6 are provided for positioning the top plate 4 at different predetermined distances from the bottom plate 2 corresponding to the height of different types of floor trunking (not shown). In an alternative embodiment an other structure for the adjusting means 5 is used to position the top plate 4 at different predetermined distances from the bottom plate 2. The adjusting means 5 comprise different predetermined positions, wherein each predetermined position of the adjusting means 5 positions the top plate 4 at a distance from the bottom plate 2 corresponding to the height of a different type of floor trunking. In the embodiment of Figure 1, the adjusting parts 6 comprise three predetermined positions which position the top plate at distances of 28 mm, 38 mm or 48 mm from the bottom plate 2, corresponding to the heights of three commonly used types of floor trunking.

Figure 1 further illustrates gripping means 18 on the adjusting parts 6. The gripping means 18 visible above the top plate 4. In the embodiment of Figure 1, the gripping means 18 are provided in the form of ribs extending over the height of the adjusting part. In alternative embodiments, the gripping means 18 may be an other structure which increases the grip on the adjusting parts 6. These gripping means 18 are turned for moving the adjusting parts 6 between the predetermined positions.

The adjusting parts 6 and the top plate 4 are provided with indicating means 19 for indicating in which of the predetermined positions the adjusting parts 6 are positioned. In the embodiment of Figure 1, the gripping means 18 on the adjusting parts 6 are provided with ribs 33 pointing to dotted markings 32 provided on the top plate 4. The top plate 4 is provided with a single dotted marking 32 for indicating a first predetermined position, with a double dotted marking 32 for indicating a second predetermined position, and with a triple dotted marking 32 for indicating a third predetermined position. As can be seen in the embodiment example shown in Figure 1, the adjusting parts 6 are positioned in the second predetermined position.

In the embodiment of Figure 1, the adjustable floor box 1 has a square shape. In alternative embodiments, the adjustable floor box has other shapes, such as circular, triangular, rectangular, pentagonal, or other polygonal shapes.

Figure 2 shows the bottom plate 2 of the adjustable floor box 1 of the embodiment of Figure 1 separately.

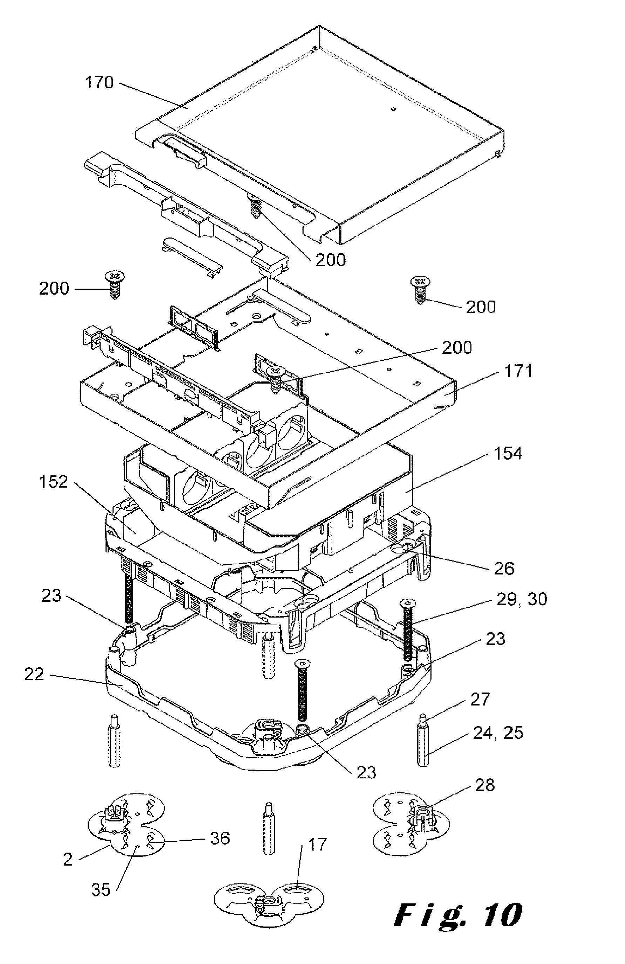

The bottom plate 2 is provided with a series of curved protruding walls 36 which are arranged in pairs with a small protrusion 35 in between each pair of curved protruding walls 36. One of the curved protruding walls 36 in each pair is provided with a central notch 17, as can be seen most clearly in Figure 10. The curved protruding walls 36 are used for connecting attaching elements 28 (shown in Figure 10) to the bottom plate 2. These attaching elements 28 are provided for attaching the stepwise adjusting means 24 of a cover assembly according to an embodiment of the invention with the bottom plate 2. The attaching elements 28 are slid in one direction in slots formed between the curved protruding walls 36 and the base plate of the bottom plate 2, after which the attaching elements 28 are rotated 90 degrees to engage under the curved protruding walls with edges on the attaching elements 28. The small hole 35 between the curved protruding walls 36 and the central notch 17 in the protruding walls 36 are provided for positioning the attaching elements 28 in the final position when they are rotated in the slots. In an alternative embodiment the hole 35 is a protrusion. Therefore, the attaching elements 28 are provided with corresponding holes and protrusions which are positioned in the small hole 35 and the central notch 17.

The bottom plate 2 of the adjustable floor box 1 is in the embodiment of Figure 2 further provided with openings 34 which are used for connecting the bottom plate 2 on the floor foundation on which the adjustable floor box 1 is arranged. These openings 34 are arranged in the far end of the corners of the bottom plate 2, and also nearby the curved protruding walls 36 in the bottom plate 2.

For aligning the adjustable floor box 1 on the floor foundation and for aligning the adjustable floor box 1 with the floor trunking, each side wall is provided centrally at the bottom with a protrusion 42 as a marking point.

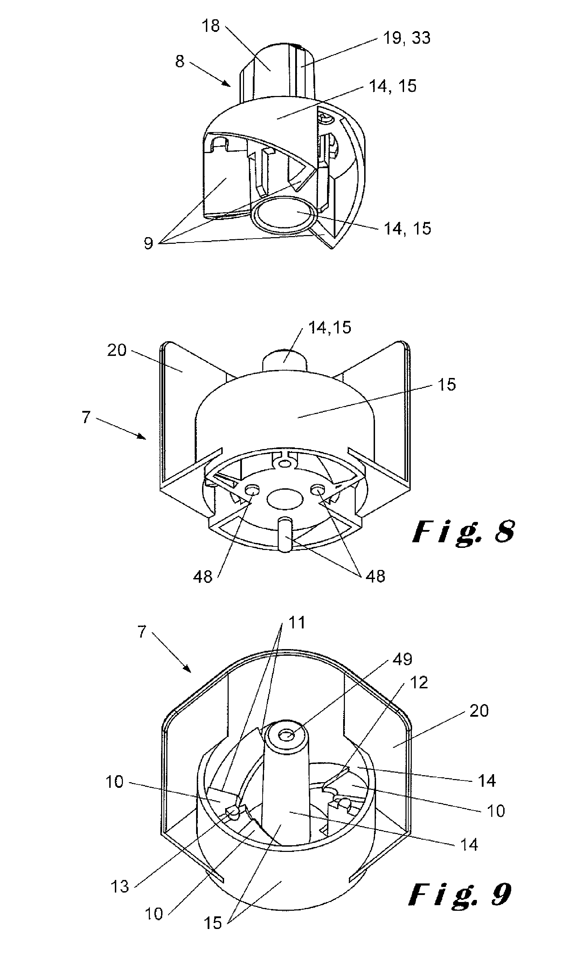

In the corners of the bottom plate, there are also provided openings 37 which are arranged in a "footprint" shape, i.e. one larger central opening with three smaller openings and a rectilinear opening arranged around it. In these openings 37 the adjusting parts 6 are positioned by means of protrusions 48 provided on the adjusting parts 6. Such protrusions 48 can be seen on the bottom part 7 of the adjusting part 6, shown in the embodiment of Figure 9.

Further, the bottom plate 2 is also provided with two ground terminal connection points 38. In the embodiment of Figure 2, these connection points 38 are rectangular protrusions provided with a hole.

Near the side walls, the bottom plate 2 is provided with protruding openings 39 facing the side walls. These protruding openings 39 are provided for connecting the floor trunking with the adjustable floor box 1 by sliding corresponding parts on the floor trunking in these protruding openings 39.

The side walls 3 of the bottom plate 2 are configured to provide openings for different types of floor trunking. Therefore, the side walls 3 are divided in pieces by means of vertically and horizontally arranged rectilinear openings 40 in the side walls 3. The rectilinear openings 40 are arranged at predetermined positions on the side walls 3, said predetermined positions corresponding with the height and width of different types of floor trunking. The rectilinear openings 40 allow the pieces, in which they divide the side walls 3, to be removed from the side walls 3. The pieces that are to be removed are chosen based on the height and the width of the floor trunking to be connected to the adjustable floor box 1.

The side walls 3 of the bottom plate 2 are also providing openings 41 for tubes carrying cables. In an alternative embodiment, the side walls 3 are provided with circular cut lines and these cut lines allow the parts of the side walls 3 surrounded by the cut lines to be removed from the side walls 3 by pushing them out, thereby leaving circular openings 41 through which the tubes may be arranged.

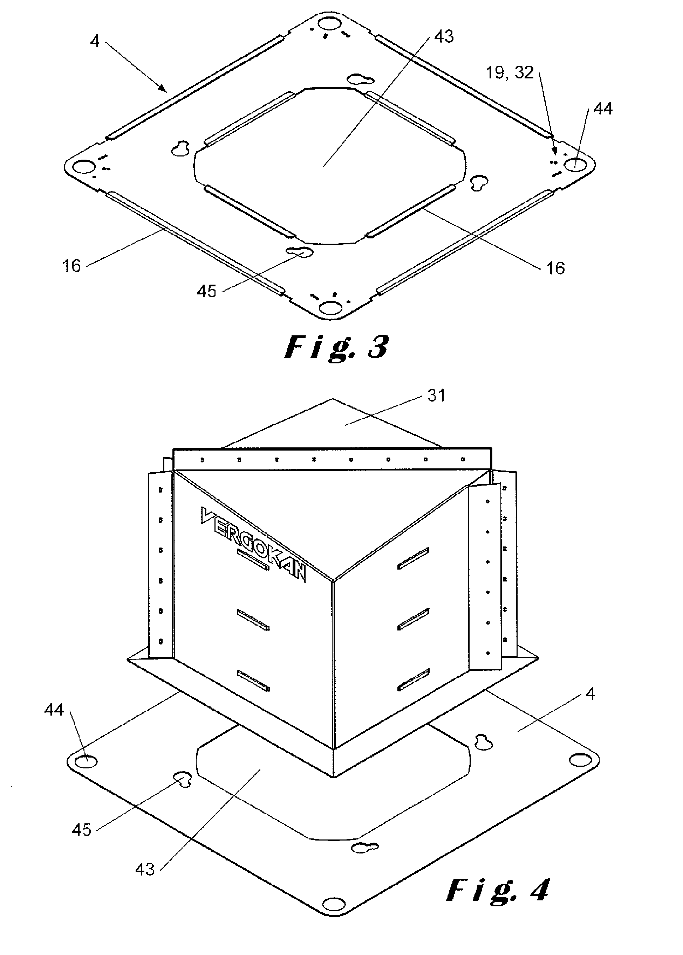

Figure 3 shows the top plate 4 of the adjustable floor box 1 of the embodiment of Figure 1 separately. The top plate 4 has a central opening 43 which provides access to the adjustable floor box 1 from above. In this way the cables arriving in the adjustable floor box are accessible for being connected with components arranged in a covering part which is suspended in a floor opening above the adjustable floor box 1, or which forms a part of a cover assembly according to an embodiment of the invention, such as shown for example in Figure 10.

Each corner of the top plate 4 has a connecting opening 44. These connecting openings 44 are used for connecting the top plate 4 with the adjusting parts 6. The gripping means 18 of the adjusting parts 6 are also inserted through the connecting openings 44, as can be seen in Figure 1, such that the adjusting parts 6 can be operated even when the top plate 4 is partially covering the adjusting parts 6.

Around the connecting openings 44, the top plate 4 is provided with dotted markings 32 which are provided, as discussed above, for indicating in which of the predetermined positions the adjusting parts 6 are positioned.

At the circumference and around the central opening 43 the top plate 4 is provided with folded edges 16 for reinforcing the top plate 4. These folded edges 16 are easily provided by folding over part of the top plate material at the circumference of the top plate 4 and around the central opening 43 in the top plate 4.

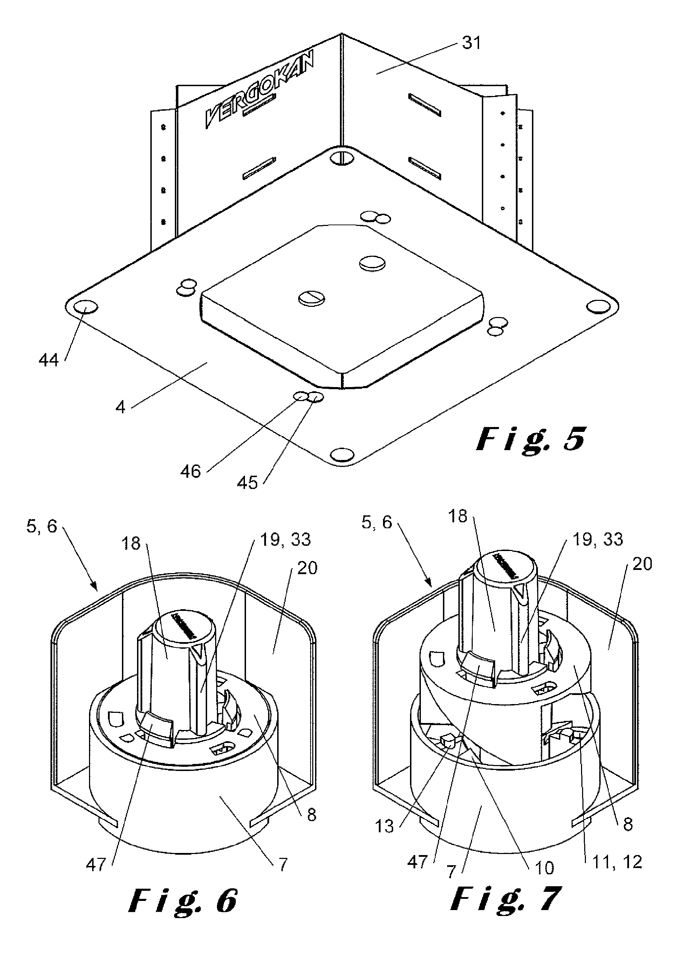

At each corner of the central opening 43 in the top plate 4 two interconnected circular openings 45 can be seen, a first circular opening having the largest diameter and a second circular opening having the smallest diameter. The interconnected circular openings 45 are provided for connecting a formwork element 31 to the top plate 4, as illustrated in Figures 4 and 5. For this purpose the formwork element 31 is provided with protrusions 46 which can be inserted through the first circular opening but engage in the second circular opening as will be discussed in more detail below. For connecting the formwork element 31 and the top plate 4 with each other, the protrusions 46 on the formwork element 31 are first positioned in the first circular opening and then moved to the second circular opening by slightly rotating the formwork element 31. This connection can be seen in Figure 5, whereas Figure 4 shows how the formwork element 31 is positioned above the top plate 4 before making the connection between both.

The formwork element 31 is used for leaving an opening in the floor above the central opening 43 in the top plate 4 of the adjustable floor box 1 when the floor is installed. This floor opening forms an access in the floor to the adjustable floor box 1, and in this opening the covering part is installed.

Figure 6 shows an adjusting part 6 of the adjustable floor box 1 of the embodiment of Figure 1. In this embodiment the adjusting part 6 is positioned in the lowest predetermined position of the predetermined positions of the adjusting means 5. In Figure 7 the adjusting part 6 is positioned in the highest predetermined position of the predetermined positions of the adjusting means 5. The adjusting parts 6 comprise a bottom part 7 and a top part 8, which are shown separate from each other in Figure 8. The bottom part 7 is shown separately in Figure 9.

The top part 8 supports on the bottom part 7, and both are configured for positioning the top part 8 at different predetermined distances with respect to the bottom part 7. The top part 7 is provided with three legs 9, which can be best seen in Figure 8. These legs 9 support on support positions 11 which are arranged on three inclined helical surfaces 10 provided on the bottom part 7. The inclined helical surfaces 10 can be best seen in Figure 9. Three support positions 11 are arranged at different heights on each of the inclined helical surfaces 10. A first support position 11 is provided at the bottom of each inclined helical surface 10, a second support position 11 is provided approximately halfway each inclined helical surface 10, and a third support position 11 is provided near the highest end of each inclined helical surface 11. The legs 9 are supported in these support positions 11, when the adjusting part 6 is moved to one of the predetermined positions. The legs supporting in the first support position 11 correspond with the first predetermined position of the adjusting means 5, and the other support positions 11 correspond similarly with the other predetermined positions. Figure 6 shows the adjustable part 6 in the first predetermined position and Figure 7 shows the adjustable part 6 in the third predetermined position.

The adjusting part 6 is moved between the different predetermined positions by rotating the top part 8 with respect to the bottom part 7 around a common axis. In this way, the legs 9 slide along the inclined helical surfaces 10 from one support position 11 to another support position 11, until the legs 9 are rested in one of the support positions 11. If the legs 9 are positioned in between support positions on the inclined helical surfaces 10, then gravity will pull the legs 9 back to support positions 11 which are arranged on a lower part of the inclined helical surfaces 10.

The bottom part 7 and the top part 8 are guided in their motion with respect to each other by means of cooperating guiding surfaces 14. The guiding surfaces 14 are in the shown embodiment provided by circular walls 15 which are arranged at the centre and at the circumference of both the bottom part 7 and the top part 8. The circular walls 15 are provided such that a circular wall 15 on the bottom part 7 and a circular wall 15 on the top part 8 fit into each other. In this way, the sides of the circular walls 15 which face each other form the guiding surfaces 14. An advantage of the circular walls 15 is that they prevent sideway movements of the bottom part 7 and the top part 8 with respect to each other.

For facilitating the manual movement of the top part 8 with respect to the bottom part 7, the adjusting part 6 is provided on top with gripping means 18. The gripping means 18 is in the embodiment of Figure 8 provided with ribs 33 which, as explained above, are also part of the indicating means 19 for indicating in which predetermined position the adjusting part 6 is positioned.

The support positions 11 are provided with protruding edges 12, which prevent the legs 9 from sliding out of the support positions 11 towards support positions 11 which are arranged on a lower part of the inclined helical surfaces 10. These protruding edges 12 can be seen in Figure 9.

At the highest end, each inclined helical surface 10 is provided with an upstanding wall 13. The upstanding wall 13 prevents the leg 9 from moving beyond the highest end of the inclined helical surface 10 on to a following inclined helical surface 10. These upstanding walls 13 can be seen in Figure 9.

The top part 8 is provided for being connected with the top plate 4 of the adjustable floor box 1. For this purpose, the top part 1 is provided with clicking legs 47, as can be seen in Figures 6 and 7. For connecting the top part 8 with the top plate 4 the clicking legs 47 are inserted through connecting openings 44 provided on the top plate 4, which can be seen in Figure 3. Once inserted through the connecting openings 44, the clicking legs 47 engage in the connecting openings 44, thereby forming the connection between the top part 8 and the top plate 4.

The bottom part 7 is provided for being connected with the bottom plate 2 of the adjustable floor box 1. Therefore, the bottom part 7 is provided at the bottom with a series of protrusions 48, as can be seen in Figure 9. For connecting the bottom part 7 with the bottom plate 2, these protrusions 48 are positioned in openings 37 provided in the bottom plate 2 for this purpose. These openings 37 can be seen in Figure 2.

The bottom part 7 is provided with an outer wall 20. When the bottom part 7 is installed on the bottom plate 2, then the outer wall 20 forms a part of the side walls of the adjustable floor box 1, as can be seen in Figure 1.

The bottom part 7 and the top part 8 can be connected with each other with connecting means (not shown). In the adjusting part 6 according to the embodiment of Figures 6-9, the connecting means comprise a bolt arranged in the circular wall 15 at the centre of the bottom part 7, and passing through an opening 49 on top of said circular wall 15. The bolt passing through said opening 49 is screwed into the top part 8 for forming the connection between the bottom part 7 and the top part 8. The bolt has a bolt head which is too large to pass through the opening 49 on top of the circular wall 15 in which the bolt is arranged. In this way, the bottom part 7 and the top part 8 can not get detached from each other. The length of the bolt should be so long as to allow the legs 9 of the top part 8 to be lifted completely over the inclined helical surfaces 10 and an upstanding wall 13 thereon. In an embodiment of the connecting means a resilient element, such as a spring, is provided between the bolt head and the opening 49 on top of the circular wall 15 in which the bolt is arranged. The resilient element is provided for pushing the top part 8 and the bottom part 7 against each other.

The number of support positions 11 on each inclined helical surface 10 is determined by the number of predetermined positions of the adjusting means 5 for positioning the top plate 4 at a distance from the bottom plate 2 of the adjustable floor box 1. The location of the support positions 11 along the inclined helical surfaces 10 is chosen based on the distances at which the adjusting means 5 have to position the top plate 4 from the bottom plate 2 of the adjustable floor box 1. These distances are determined by the height of the types of floor trunking that will be connected to the adjustable floor box 1.

In alternative embodiments, there are more or less legs 9 and inclined helical surfaces 10 than three.

In an alternative embodiment, the inclined helical surfaces 10 are provided on the top part 8 instead of on the bottom part 7, in which case the legs 9 are provided on the bottom part 7. In this way the top part 8 supports with the support positions 11 of the inclined helical surfaces 10 on the legs 9 of the bottom part 7.

Figure 10 shows an exploded view of the cover assembly according to an embodiment of the invention.

At the bottom of the figure the bottom plate 2 of a floor box 1 is partially shown. The cover assembly illustrated in Figure 10 is configured to be installed on the bottom plate 2. Only partial views of the bottom plate 2 are shown. The partial views are showing parts of the bottom plate 2 which are provided with attaching elements 28 for attaching the cover assembly to the bottom plate 2. In the embodiment of Figure 10, the attaching elements 28 are arranged between curved protruding walls 36 on the bottom plate 2, as discussed above.

The stackable elements 25 of the stepwise adjusting means 24 are inserted in the attaching elements 28. For attaching the stackable elements 25 to the bottom plate 2, they are clamped by the attaching elements 28. The stackable elements 25 are provided with an internally threaded opening (not visible) at one end, and an externally threaded connecting part 27 at the opposite end. This allows the stackable elements 25 to be stacked onto each other and connected with each other for positioning a support frame 22 at a distance from the bottom plate 2. The stackable elements 25 have a predetermined length, such that the support frame 22 may be positioned at a distance from the bottom plate 2 in steps of predetermined length. The stackable elements 25 can be connected with the support frame 22 by screwing the connecting part 27 of the stackable elements 25 into internally threaded openings (not visible) provided at the bottom of the support frame 22.

The cover assembly according to the embodiment of Figure 10 also comprises precise adjusting means 29. The precise adjusting means 29 are arranged on top of the support frame 22 and are used for positioning a covering part of the cover assembly at a distance from the support frame 22. The precise adjusting means 29 comprise screws 30 which are screwed into internally threaded openings 23 through the support frame 22. By screwing the screws 30 inwards or outwards of the threaded openings 23 in the support frame 22, the height of the precise adjusting means 29 may be adjusted.

The precise adjusting means 29 are connected to the covering part, which comprises a cover 170, a cover frame 171, a component holder 154 and a component holder frame 152. The covering part and the precise adjusting means 29 are connected to each other by arranging the heads of the screws 30 in between the component holder frame 152 and the cover frame 171. Therefore, the component holder frame 152 is provided with interconnected circular openings 26. For connecting the precise adjusting means 29 to the covering part, the screw head is inserted through the first circular opening with a diameter larger than the screw head, after which the screw 30 is moved to the second circular opening with a diameter smaller than the screw head. The cover frame 171 is then attached to the component holder frame 152 above the screw head. In the cover frame 171 there are openings with a smaller diameter than the screw head, which openings allow access of a screw driver to the screw head. In this way, the covering part moves together with the screws 30 when the screws 30 are screwed inwards or outwards of the threaded openings 23 through the support frame 22, allowing the distance of the covering part with respect to the support frame 22 to be adjusted precisely.

The cover frame 171 and the component holder frame 152 are arranged such that the distance between both may be varied. This may for example be achieved by connecting the cover frame 171 and the component holder frame 152 to each other with screws 200.

With a larger distance between the cover frame 171 and the component holder frame 152, the screw heads may move within a larger range between the component holder frame 152 and the cover frame 171. In this way the covering part is loosely connected to the precise adjusting means 29, allowing some movement of the covering part with respect to the precise adjusting means 29. This has the advantage that the covering part may be moved over a larger distance in each corner before the height of the covering part also needs to be adjusted in the others corners because the covering part is tilted and cannot be moved further in one of the corners.

With a smaller distance between the cover frame 171 and the component holder frame 152, the covering part is better attached to the precise adjusting means 29, while still allowing the height of the covering part to be adjusted with respect to the support frame 22 but now only in a smaller range in each corner before the other corners also have to be adjusted in height. This smaller distance should be not so small that the screw heads may not be rotated anymore. The screw heads should thus not be completely clamped between the cover frame 171 and the component holder frame 152.

Hence, for adjusting the height of the covering part with respect to the support frame 22 with the precise adjusting means 29, it is beneficial to first position the cover frame 171 at a larger distance with respect to the component holder frame 152. This allows the precise adjusting means 29 to operate over a large range in each corner of the covering part before the other corners also have to be adjusted. In this way the height of the upper surface of the covering part may be quickly set very close to the height of the upper surface of the floor. Afterwards the covering part may be fixed better to the precise adjusting means 29 by decreasing the distance between the cover frame 171 and the component holder frame 152, thereby still allowing a final fine-tuning of the height of the covering part with respect to the support frame 22.

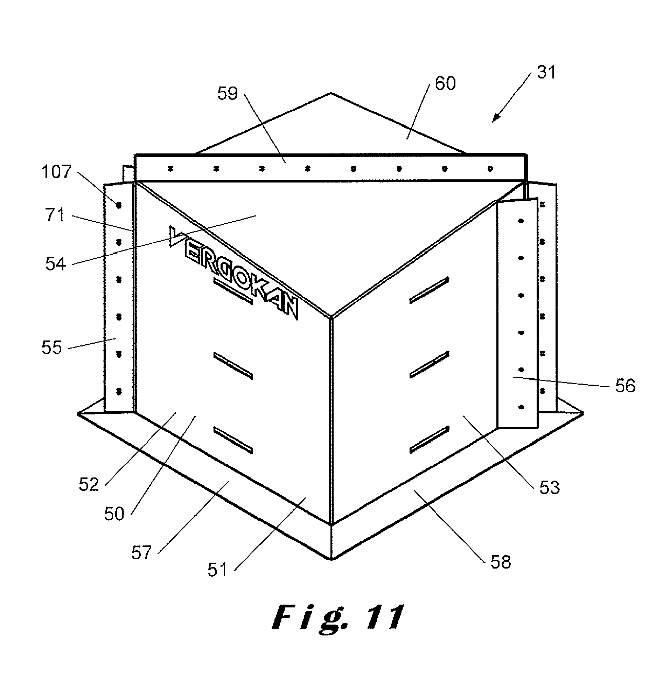

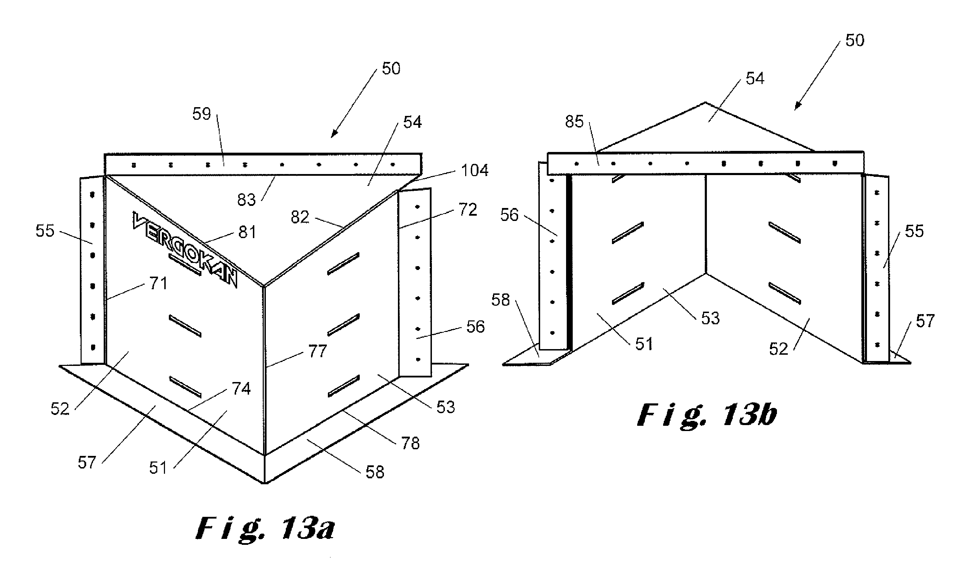

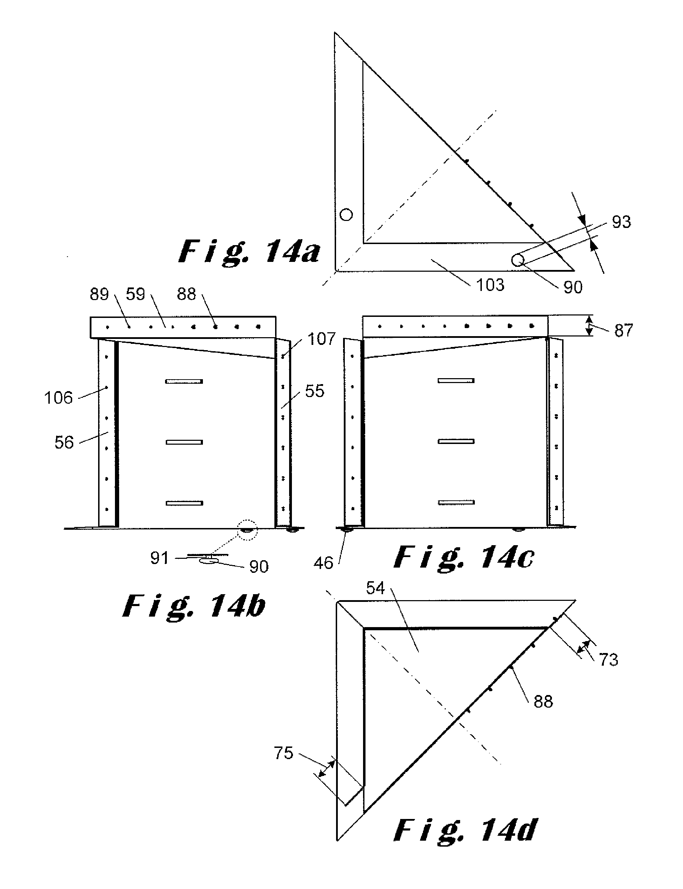

Referring to Figures 11 to 14a-14d, a formwork element 31 according to an embodiment of the invention is shown. The formwork element 31 has a first part 50 and a second part 60. In the embodiment of Figures 11 to 14a-14d, the first part 50 is identical to the second part 60. In alternative embodiments the first part 50 and the second part 60 are not identical but allow still to connect to each other to form a single formwork element. The first part 50 in Figures 13a-13b has a sidewall 51. The outer surface of the sidewall 51 forms a first portion of the outside surface of the formwork element 31. The sidewall 51 comprises a first vertical planar part 52 and a second vertical planar part 53. Both planar parts 52,53 are connected substantially perpendicular towards each other forming a corner of two planar parts. The bottom edges 74, 78 of both parts 52, 53 are in a horizontal plane. The vertical corner edge 77 where the first and second planar parts 52, 53 connect is lower than the size of the vertical free edges 71, 72. This means that the first planar part 52 and the second planar part 53 have the shape of a rectangle trapezoid with the two right angles (90°) at the bottom edges 74, 78 and the shortest vertical edge 77 of the two parallel vertical edges at the connection.

A third planar part 54 is connecting the top edges 81, 82 of the first and second planar parts 52, 53 forming a top part 54 over the volume formed by the first and second planar parts 52, 53. The third planar part 54 is triangular in shape and inclined with respect to the horizontal plane of the bottom edges 74, 78 of the first and second planar parts 52, 53.

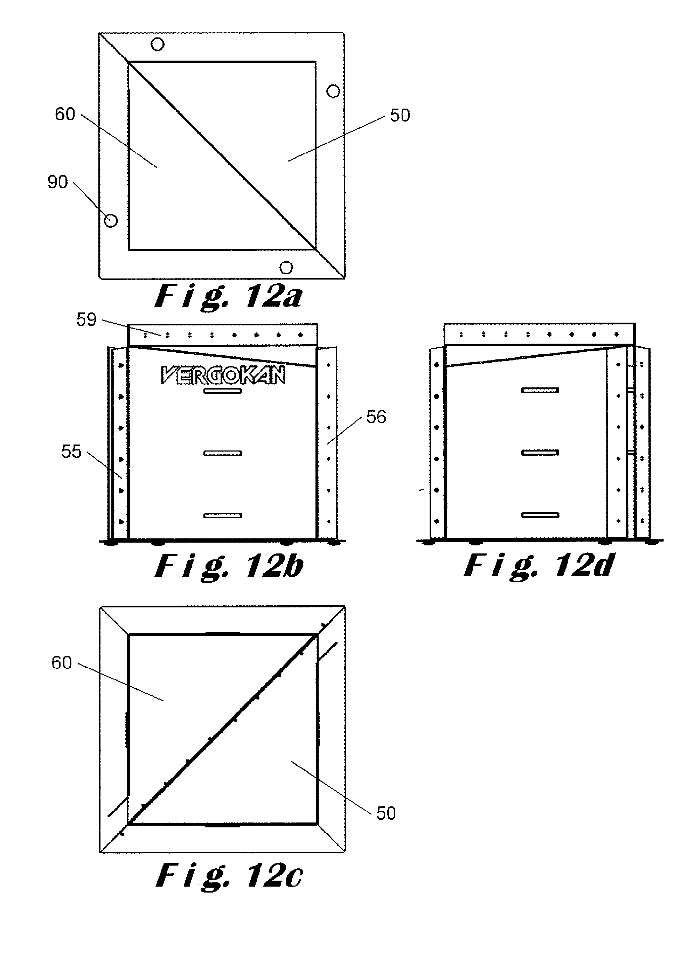

The first vertical planar plane 52 is elongated with a first connection part 55. The first connection part 55 hinges with respect to the first planar part 52 with the vertical edge 71 as pivot axis. This connection part 55 has a certain width 73 sufficient to provide a vertical row of fastening elements 107 on it. The second vertical planar part 53 is similarly elongated with a second connection part 56. The width 75 of the second connection part 56 is a bit larger than the width 73 of the first connection part 55 such that, when two of these parts 50, 60 are connected to each other such as shown in Figures 11 and 12a-12d, the first connection part 55 of a first part 50 can be positioned under the second connection part 56 of a second part 60.

On the third edge 83 of the triangular top part 54, i.e. the edge which is not connecting to the planar parts 52, 53, is a top connection part 59 provided. The top connection part 59 is extending substantially vertically from the edge 83 and upwards. The height 87 of this top connection part 59 is sufficient to provide a horizontal row of fastening elements 88, 89.

On the bottom edges 74, 78 of the first and second vertical planar parts 52, 53 are two bottom parts 57, 58. The bottom parts are extending horizontally from the edges and outwards. In the embodiment of Figures 11 to 14a-14d, the bottom parts 57, 58 are extending such that when connecting two parts 50, 60 to each other, the bottom parts 57, 58 of the two parts 50, 60 are forming a rectangular with a closed contour and open at the inside of the vertical planar parts 52, 53.

The bottom parts 57, 58 have on their bottom surface 103 a protrusion 46. The protrusion 46 extends on the bottom surface 103 as a bar 91 with a first diameter and ends with a head 90 of a larger diameter 93. As illustrated in Figures 4 and 5, the head 90 fits into the largest circular opening of the two interconnected circular openings 45 in the top plate 4 of the floor box 1. After positioning the formwork element 31 with the heads 90 in the larger circular openings, the formwork element 31 is rotated such that the protrusions 46 move into the smaller circular opening of the two interconnected circular openings 45. The axis of rotation is substantially perpendicular to the floor foundation on which the floor box is positioned. After rotation, the formwork element 31 is connected to the top plate 4 as illustrated in Figure 5.

In an alternative embodiment, the formwork element 31 is connected to the floor box 1 using an alternative technique such as bolts, screws or Velcro. However, the embodiment with the protrusions 46 has the advantage over the alternatives that no external tool is required to connect the formwork element 31 permanently to the floor box 1. Indeed, after rotation the formwork element 31 is locked in the vertical direction but could still be removed by rotating back. After applying however an intermediate layer of substrate material around the formwork element, the formwork element can no longer be rotated and is permanently connected to the floor box 1 without the need of a tool. This is a very effective way of reducing the installation time for the installer. Furthermore, the connection is at the same time secure and ensures that the formwork element 31 remains in position.

In an alternative embodiment, the outside surface of the formwork element 31 comprises an alternative amount of vertical planar or curved planar parts forming still a frame open in two perpendicular planes. The result is a formwork element 31 that has a different shape, such as a cylinder, a triangle, or other polygon.

In still an alternative embodiment, the outside surface of the formwork element 31 is formed by two or more different parts. The two or more different parts form when connected a frame open in the horizontal bottom plane such that an open connection can be made towards the floor box.

In the embodiment of Figures 11 and 12a-12d, both the first part and the second part 50,60 have vertical planar parts 52, 53, covered by an inclined top part 54, creating a cavity. This has the advantage that the parts are stackable into each other making it very convenient to store and transport a set of two parts 50, 60 for a formwork element 31 as well as a pile of multiple parts 50.

In the embodiment of Figures 11 to 14a-14d, the first part 50 and the second part 60 are made from a polymer material. Alternatively, the formwork element 31 can be made from a wide range of materials, including all kind of plastics, metal, wood and cardboard.

In the embodiment of Figures 11 to 14a-14d, the parts 50,60 are produced via injection molding. In an alternative embodiment, another technique is used such as extrusion, folding, thermoforming and 3D-printing.

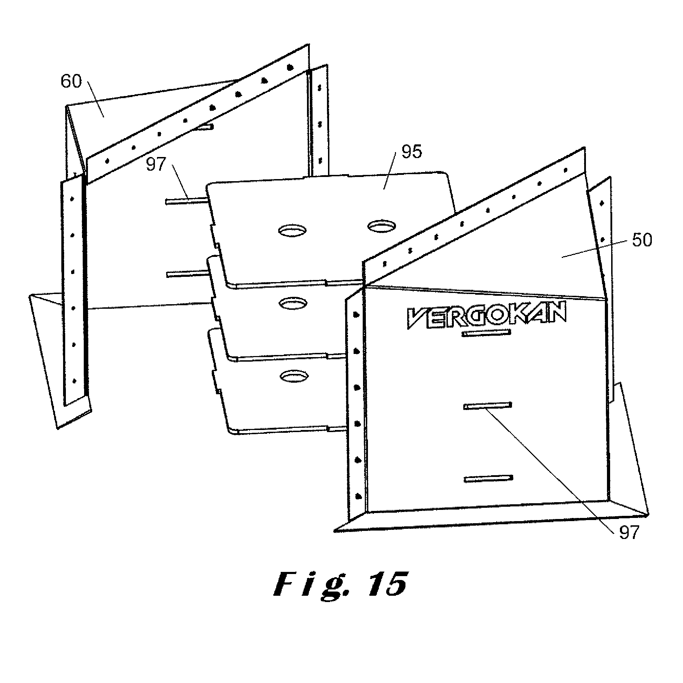

Referring to Figures 15 to 16a-16b, in an embodiment of the invention, strengthening parts 95 are provided to strengthen the formwork element 31. These strengthening parts 95 are intended to withstand external pressure on the sidewall 51 of the formwork element 31 while the intermediate layers are provided on the floor foundation around the formwork element 31. In the embodiment of the Figures, three strengthening parts 95 are provided. In alternative embodiments, more or less strengthening parts 95 are used. Each strengthening part 95 is in the form of a plate with an extension 96 on each edge 92. The strengthening part 95 is provided with two holes 94 for easy handling during installation as well as storing. In an alternative embodiment, the holes 94 are not provided. The extensions 96 are corresponding to openings 97 in the vertical planar parts 52, 53. In the current embodiment, the strengthening parts 95 are made from cardboard. Alternatively, they are made from polymer material, metal or wood.

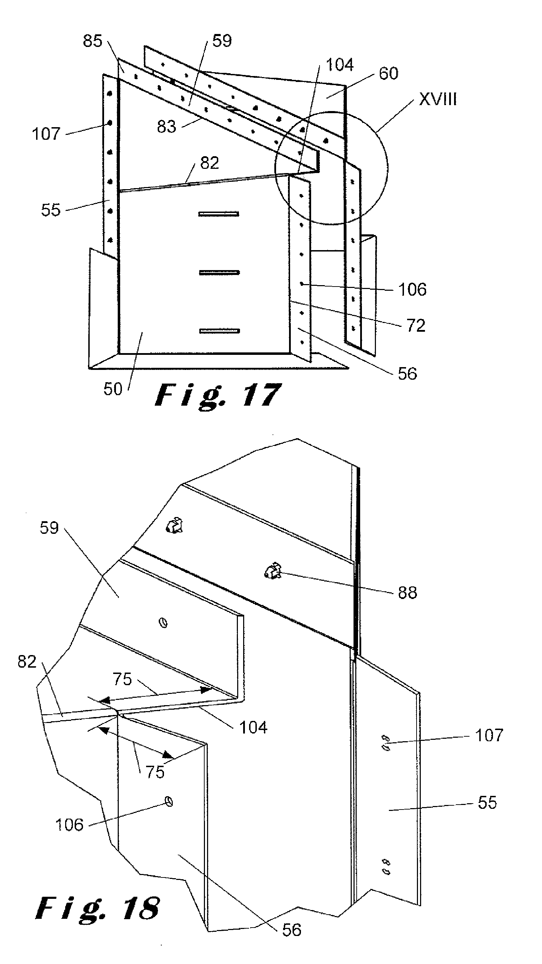

Referring to Figures 17 and 18, the connection between a first part 50 and a second part 60 forming a formwork element 31 is illustrated according to an embodiment of the invention. The first part 50 has a first connection part 55 which is hinging with respect to the first planar part 52 about the vertical edge 71. The first part 50 has a second connection part 56 which is hinging with respect to the second planar part 53 about the vertical edge 72. The first part 50 has a top connection part 59 which is substantially vertical and which extends from the horizontal edge 83.

The top part 54 has three edges. The top edge 81 of the first vertical planar part 52 is the same as a first edge of the top part 54. The top edge 82 of the second vertical planar part 53 is however shorter than the second edge 104 of the top part 54. Thus the vertical edge 71 of the first planar part 52 ends on top where it connects with the top part 54 at the end of the first edge 81 and the third edge 83 of the top part 54. The vertical edge 72 of the second vertical planar part 53 ends also on the top part 54 at the edge 104, but not at the end of edge 104. The edge 104 is longer ending at edge 83. The corner of edge 104 and edge 83 is at a distance 75 from the pivot axis 72 of the second connection part 56 and the width of the second connection part 56 is also substantially equal to 75.

The second connection part 56 is characterized by an array of six holes 106 divided over the height of the connection part 56 at equal distances from each other. The first connection part 55 has an array of six equidistant clips 107. The clips 107 are created such that they fit into the holes 106 and lock into it. The third connection part 59 has over half its length a row of holes 89, followed by a row of clips 88, all placed at the same distance. The size and shape of the holes and clips are such that these can connect. In the embodiment of the Figures 1 to 19a-19b the holes 88 and clips 89 are the same as the holes 106 and clips 107. In alternative embodiments the connections on the vertical parts may be different than the connections on the horizontal part.

The size and shape, and the position and interval of the clips 88, 107 and holes 89, 106 are chosen in such a way that the clips 107 of the first connection part 55 of the first part 50 connect with the holes 106 of the second connection part 56 of the second part 60. Likewise, the holes 106 the second connection part 56 of the first part 50 connect with the clips 107 of the first connection part 56 of the second part. And, the clips 88 and holes 89 of the top connection part 59 of the first part 50 connect with the holes 89 and clips 88 of the top connection part 59 of the second part 60.

In an alternative embodiment, a different amount and/or distribution of clips and holes are used. In still another alternative embodiment, a different method, such as glue, clamps and the like, is used to connect the connection part to each other.

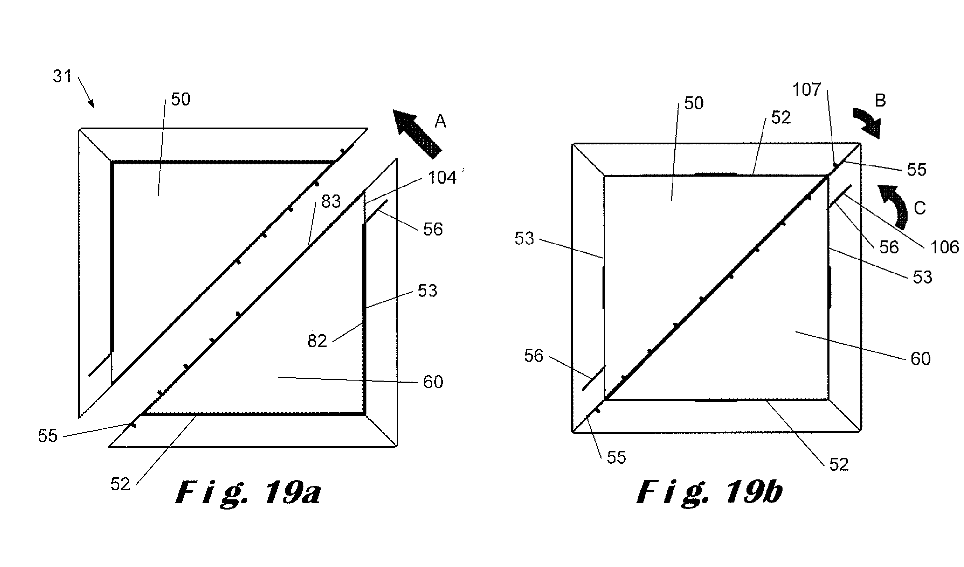

Referring to Figures 19a-19b, the assembling steps are illustrated to assemble the formwork element 31 from two parts 50, 60 according to an embodiment of the invention. In a first step, the first part 50 and the second part 60 are positioned such that the connection parts are facing each other. The top connection parts 59 are first connected with each other. Therefore, the clips 88 of the top connection parts 59 of the first and second parts 50, 60 are lined up against the holes 89 of the top connection parts 59 of the first and second parts 50, 60, each in their counterparts. This is indicated by an arrow A in Figure 19a.

In a second step, the first connection part 55 of the first part 50 is rotated so that it is positioned in the plane of the second vertical planar part 53 of the second part 60. This is illustrated by arrow B in Figure 19b. The second connection part 56 of the second part 60 is subsequently rotated on top of the first connection part 55 of the first part such that the holes 106 of the second part 60 are aligned with the clips 107 of the first part 50. This is illustrated by arrow C in Figure 19b. The clips 107 are subsequently inserted and a connection is made between the two parts 50, 60. Likewise, the first connection part 55 of the second part 60 is rotated so that it is positioned in a plane with the second vertical planar part 53 of the first part 50. The second connection part 56 of the first part 50 is subsequently rotated on top of the first connection part 55 of the second part 60. Similar as on the other side, the clips 107 of the first connection part 55 of the second part 60 are inserted in the holes 106 of the second connection part 56 of the first part 50.

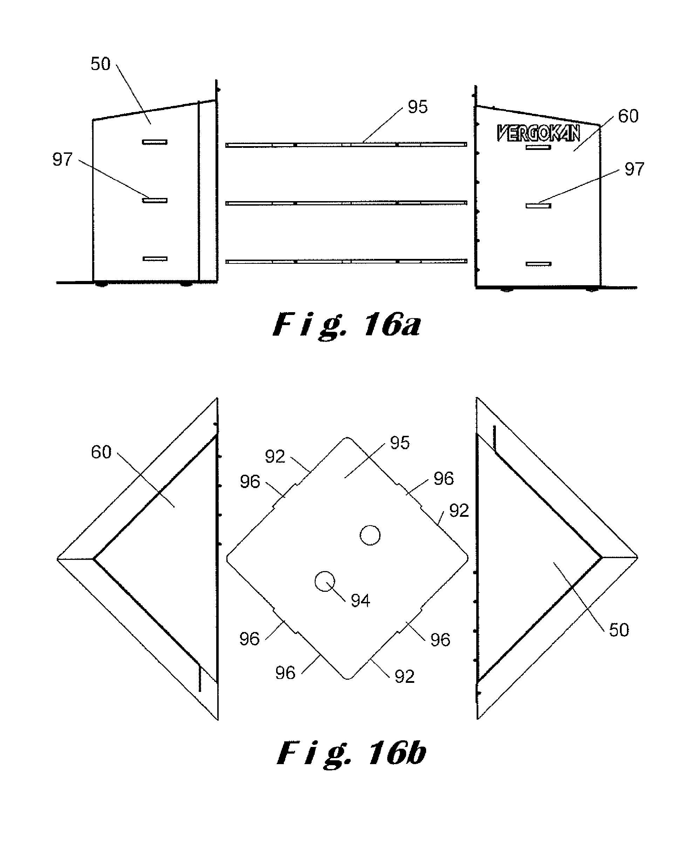

In embodiments with strengthening parts 95, before connecting the first part 50 with the second part 60, the strengthening parts 95 are first positioned in one of the first and second part 50, 60 by positioning the extensions 96 of the strengthening parts 95 in the corresponding openings 97 of the vertical planar parts 52, 53. When the second part is subsequently positioned as described above, the two parts are connected with the strengthening parts between the two parts 50, 60 as illustrated in Figures 15 and 16a-16b.

When the formwork element 31 is assembled, it is ready to be positioned on the top plate 4 of the floor box 1. As described above, the top plate 4 is equipped with interconnected circular openings 45, a first circular opening having the largest diameter and a second circular opening having the smallest diameter. To connect the formwork element 31 with the top plate 4, the bottom parts 57, 58 of the first and second parts 50, 60 are provided with protrusions 46 having a bar 91 and head 90.

After applying the necessary intermediate layers, the formwork element 31 can no longer be rotated or easily removed from the top plate 4. The formwork element now completely covers the opening to the floor box 1. In order to create an access to the opening, the installer will therefore have to remove a higher part of the formwork element using a standard cutting tool. A lower part of the formwork element remains in the opening created by the element. The advantage is that the planar parts of the formwork element cover the intermediate layers. This avoids damage to the guiding cables or possible injuries of the installer through contact with the rough intermediate layers.

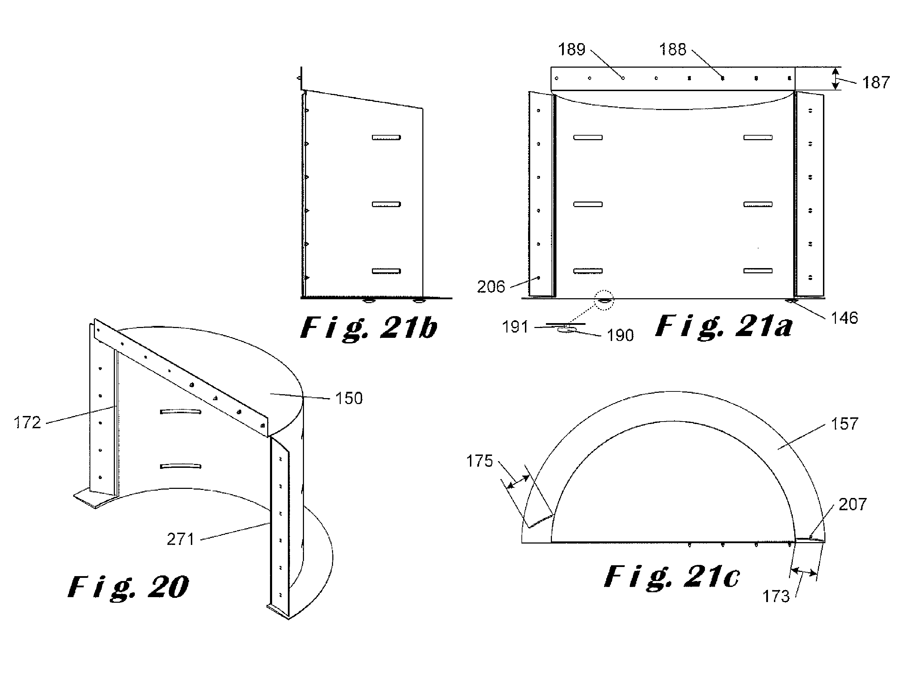

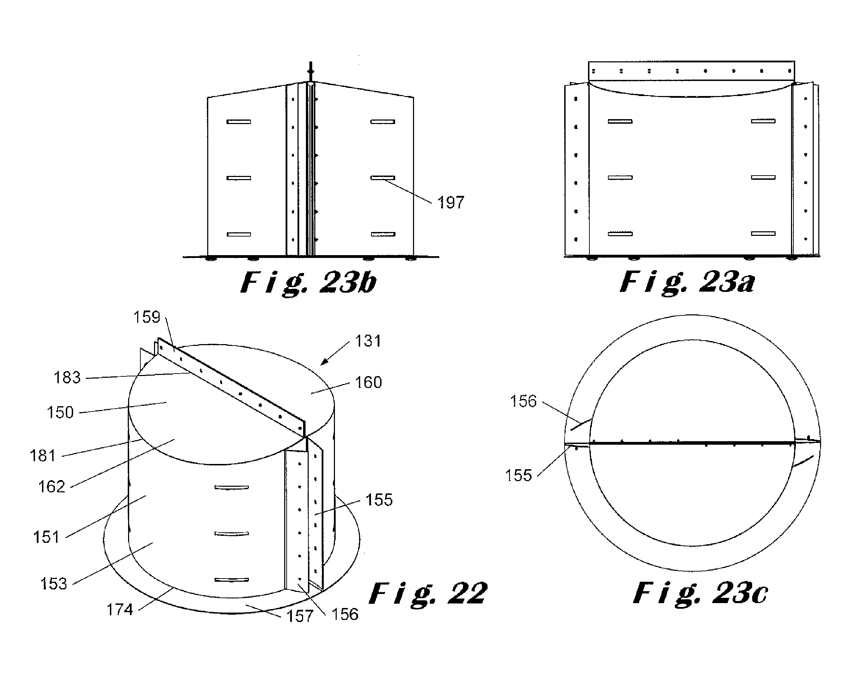

Referring to Figures 20 to 23a-23c, an alternative embodiment of the formwork element 131 is illustrated. The formwork element in this embodiment differs from the above described embodiment in that it has a cylindrical shape. Similar to the embodiment described above, the formwork element 131 has a first part 150 and a second part 160 which are identical. In alternative embodiments the first part 150 and the second part 160 are not identical but allow still to connect to each other to form a single formwork element 131. According to the current embodiment, the first part 150 has a sidewall 151 comprising a curved vertical planar part 153. The curved planar part 153 has a bottom edge 174, a top edge 181 and two vertical free edges 271, 172. A top planar part 162 is defined by the top edge 181 and a horizontal edge 183. The top planar part 162 has substantially the shape of a semicircle.

In the current embodiment, the top planar part 162 is not a horizontal planar part, but descends starting from the horizontal edge 183. The horizontal edge 183 marks therefore the highest part of the top planar part 162. The slope allows for better stapling during storing and transport.

Similar to the embodiment described above, the curved planar part 153 has a third connection part 155 hinging with respect to the curved planar part 153 with the vertical edge 271 as pivot axis and a fourth connection part 156 hinging with respect to the curved planar part 153 with the vertical edge 172 as pivot axis. The connection part 155 has a width 173 and is provided with a vertical row of fastening elements 207. The connection part 156 has a width 175, being a bit larger than 173, and is provided with a vertical row of holes 206.

A top connection part 159 is provided on the horizontal edge of the top planar part 162. The top connection part 159 is extending substantially vertically from the horizontal edge 183 and upwards. The height 187 of this top connection part 159 is sufficient to provide a horizontal row of fastening elements 188,189.

Similar to the previous embodiment, the bottom edge 174 of the curved planar part 153 has a bottom part 157. The bottom part is extending horizontally from the edge and outwards. When connecting two parts 150, 160 to each other, the bottom parts 157 of the two parts 50, 60 are forming a circle with a closed contour.

The bottom part 157 has on its bottom surface a protrusion 146. The protrusion 146 extends on the bottom surface 103 as a bar 191 with a first diameter and ends with a head 190 of a larger diameter. Connecting the protrusions 146 of the formwork element to the top plate 4 is done following a procedure similar to the one described for the previous embodiment.

Similar to the previous embodiment, the formwork element 131 is equipped with openings 197 receiving the extensions of strengthening parts. The assembling steps were described above and also apply for the current embodiment.

## Claims

1. A formwork element for a floor box system creating an opening towards a floor box positioned on a floor foundation while at least one layer of substrate is formed around the floor box, said element comprising
a first part comprising a first sidewall for forming a first portion of the outside surface of the formwork element, and
a second part comprising a second sidewall for forming a second portion of the outside surface of the formwork element,
wherein said first part and said second part comprise first and second connecting means for connecting said first part to said second part and wherein said first portion and said second portion form after connection the outside surface of the formwork element over the whole contour of the opening.

2. An element according to claim 1, wherein said first part and said second part are configured such that the second part can be at least partially positioned in the first part for transporting and storing.

3. An element according to any one of the preceding claims, wherein said first part has first floor box connecting means for connecting said element with said floor box.

4. An element according to any one of the preceding claims, wherein said second part has second floor box connecting means for connecting said element with said floor box.

5. An element according to claim 3, wherein said first floor box connecting means comprises at least one connecting means which requires a rotation movement of the element around an axis substantially perpendicular to the base floor.

6. An element according to claim 4, wherein said second floor box connecting means comprises at least one connecting means which requires a rotation movement of the element around an axis substantially perpendicular to the base floor.

7. An element according to any one of the preceding claims, wherein said first sidewall comprises a first main portion and two first sidewall connection portions rotatable with respect to said first main portion, wherein said first connecting means is at least partially provided on the two first sidewall connection portions.

8. An element according to any one of the preceding claims, wherein said second sidewall comprises a second main portion and two second sidewall connection portions rotatable with respect to said second main portion, wherein said second connecting means is at least partially provided on the two second sidewall connection portions.

9. An element according to claims 7 and 8, wherein, when said first part is connected with said second part, a first one of said two first sidewall connection portions is overlapping with a first one of said two second sidewall connection portions, and a second one of said two first sidewall connection portions is connecting with a second one of said second sidewall connection portions.

10. An element according to any one of the preceding claims, wherein said first part further comprises a first top planar part and said second part further comprises a second top planar part, wherein said first top planar part is connected to said first side wall forming a frame open in two planes of which a first plane is positioned where the first and second part are connectable and a second plane is positioned where the element in use faces the floor box, and wherein said second top planar part is connected to said second side wall forming a frame open in two planes of which a first plane is positioned where the first and second part are connectable and a second plane is positioned where the element in use faces the floor box.

11. An element according to claim 10 wherein said first and second top planar parts comprise a top connection means to connect the first part to the second part.

12. An element according to any one of the preceding claims, wherein said first, second and top connecting means comprise clips and holes.

13. An element according to any one of the preceding claims, wherein said element comprises at least one strengthening element to strengthen the element against external pressure.

14. An element according to any one of the preceding claims, wherein said second part and said first part are identical.

15. An element for creating an opening towards a floor box while substrate material is provided around a floor box, said opening providing access to the floor box, said element comprising
two identical parts connectable to each other to form said element, each part comprising a sidewall for forming the outside surface of the element which is in use at least partially in contact with the substrate material and connecting means for connecting each part to an identical part.

16. An element according to claim 11, wherein each identical part further comprises a top wall connected to said side wall forming a frame open in two planes of which a first plane is positioned where the identical parts are connectable and a second plane is positioned where the element in use faces the floor box.
